# EUROPEAN PATENT SPECIFICATION

(11) **EP 4 318 106 B1**
(45) Date of publication and mention of the grant of the patent: **27.05.2026**
(21) Application number: 22781348.2
(22) Date of filing: 04.01.2022
(51) Int. Cl.: G02C 7/16, G02C 11/00, B06B 1/06, G02C 5/00

(54) **VIBRATION UNIT AVAILABLE FOR EYESIGHT RECOVERY GLASSES**
VIBRATIONSEINHEIT FÜR BRILLEN ZUR SICHTWIEDERHERSTELLUNG
UNITÉ DE VIBRATION DISPONIBLE POUR DES LUNETTES DE RÉCUPÉRATION DE VUE

(30) Priority: 30.03.2021 KR 20210041077
(43) Date of publication of application: 07.02.2024
(73) Proprietor: Tentech Inc., Seoul 06103 (KR)
(72) Inventor: KIM, Bo Yeong, Seoul 02250 (KR)
(74) Representative: Gille Hrabal Partnerschaftsgesellschaft mbB Patentanwälte
(86) International application number: PCT/KR2022/000101
(87) International publication number: WO 2022/211227

(56) References cited:
- CN-A- 110 381 900
- CN-A- 111 562 684
- CN-U- 207 081 907
- JP-A- 2000 066 151
- JP-A- 2000 066 151
- JP-A- 2015 104 498
- JP-A- 2018 110 868
- JP-U- H0 712 138
- KR-A- 20060 001 786
- KR-A- 20110 134 716
- KR-A- 20190 042 902
- KR-A- 20220 017 602

## Description

### Technical Field

The present disclosure relates to eyesight recovery glasses comprising a vibration unit and, more particularly, a vibration unit for generating ultrasonic waves through vibration and transmitting the ultrasonic waves to the eyeball.

### Background Art

Glasses are devices configured to be worn on the face of a user who has impaired eyesight, and are devices configured to improve the user's eyesight. Recently, various types of glasses devices that correct or recover a wearer's eyesight by glasses that provide corrected eyesight through lenses have been introduced.

Meanwhile, amblyopia refers to a state in which no special abnormality is found in the eye, but normal corrected eyesight is not achieved. Amblyopia may be roughly divided into strabismus amblyopia and refractive amblyopia.

When the eyes have strabismus, both eyes look in different directions, so that diplopia occurs. Strabismus amblyopia refers to a case in which active inhibition occurs in the cerebral brain to prevent confusion due to diplopia and thereby the cerebral brain hinders the development of eyesight in one eye. In addition, when the refractive indices in both eyes are different, the looking directions of the both eyes are the same, but the focus of the both eyes is different, so that the focus of the other eye becomes blurry as the focus of one eye is adjusted. Refractive amblyopia refers to a case in which active inhibition occurs on the corresponding other eye and thereby the development of eyesight of the other eye is hindered.

Among these, treatment of strabismus amblyopia is relatively easy to be performed since strabismus amblyopia is easy to be detected. However, in refractive amblyopia, since there are no apparent abnormal findings, refractive amblyopia is often discovered accidentally during an eye exam after a person with amblyopia has grown considerably. However, generally, it is known that a treatment effect of amblyopia decreases significantly when a person is over 6 years old, and no further treatment effect is expected when the person is over 10 years old. Therefore, it is important to detect and treat amblyopia early.

Occlusion treatment is used as one of the treatment methods for amblyopia. Occlusion treatment is a treatment that improves eyesight of a patient by covering the normal eye with an eye patch and forcing the patient to use only the amblyopic eye.

As a related art document related to eyesight correction glasses using such occlusion treatment, Korean Patent Application Publication No. 10-2019-0042902 (published on April 25, 2019, GLASSES FOR CORRECTION OF VISION USING OCCLUSION THERAPY) has been disclosed.

Meanwhile, in one of the other methods used for correcting eyesight, a pin hole method is used. When a user wears glasses having lenses provided with multiple holes (hereinafter referred to as "pin holes") in a thin opaque plate, the wearer's eye muscles naturally exercise while the wearer is looking at an object through the pin holes. Furthermore, this natural exercise movement process of the eye muscles is performed repeatedly, resulting in a phenomenon of eyesight recovery function, and this effect is called the "pinhole effect".

Since such a "pinhole effect" has been known both at home and abroad for a long time, many glasses (pinhole glasses) using this principle have been manufactured in countries around the world for a long time, and such glasses have been used for correcting various visual disorders, myopia, astigmatism, hyperopia, presbyopia, and so on.

As a related art document related to eyesight correcting glasses using pin holes, Korean Patent Application Publication No. 10-2012-0022116 (March 12, 2012, LENS FOR EYESIGHT PROOFREADING GLASSES AND METHOD OF MANUFACTURE) has been disclosed.

However, in the glasses technology of related art using occlusion treatment and pin holes described above, since a means for correcting eyesight is focused on an eye movement through visual field adjustment, there is a problem that the actual effect of correcting eyesight or restoring eyesight is insufficient.

JP 2015104498 A, CN 111 582 884 A and CN 207 081 907 U each disclose spectacles comprising vibration units:

JP 2015104498 A disclose an eyesight recovery glasses, comprising a vibration unit.

CN 111 582 884 A discloses microneedle physiotherapy glasses comprising an ultrasonic penetration head which contacts the lower eyelid of a user.
CN 207 081 907 U discloses a massage spectacle frame comprising a micro-ultrasonic motor which drives massage balls.

### Technical Problem

Accordingly, the present disclosure has been made keeping in mind the above problems occurring in the related art, and an objective of the present disclosure is to provide eyesight recovery glasses comprising a vibration unit configured to directly transmit ultrasonic waves in a low frequency band to the eyeball rather than inducing an eye movement, thereby being capable of realizing a substantial eyesight recovery effect.

Another objective of the present disclosure is to provide eyesight recovery glasses comprising a vibration unit capable of helping to relieve eye strain, to increase blood flow, and to activate eye cells through ultrasonic waves transmitted to the eyeball.

Other detailed objectives of the present disclosure will be obviously known and understood by experts or researchers in the present technical field through specific contents described below.

### Technical Solution

The objectives described above are solved by means of eyesight recovery glasses comprising a vibration unit comprising the features of independent claim 1.

Advantageous embodiments are subject matter of the dependent claims.

### Advantageous Effects

According to the present disclosure, the eyesight recovery glasses comprising a vibration unit capable of realizing a substantial eyesight recovery effect by directly transmitting ultrasonic waves in a low frequency band to the eyeball rather than inducing an eye movement may be provided.

In addition, ultrasonic waves transmitted to the eyeball may help to relieve eye strain, to increase blood flow, and to activate eye cells.

### Description of Drawings

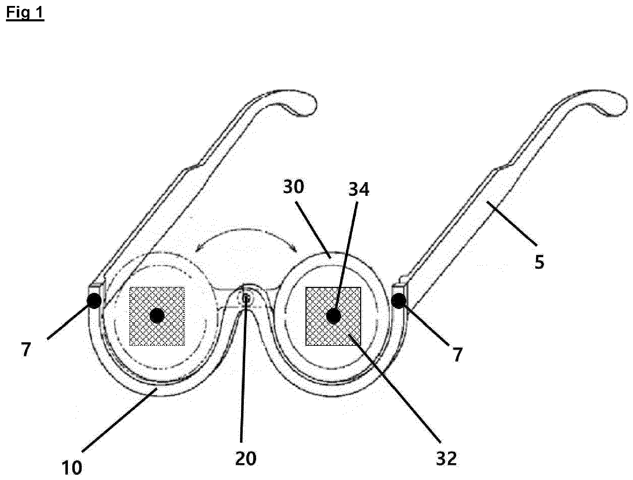

FIG. 1 is a perspective view illustrating eyesight recovery glasses according to the present disclosure.

### Mode for Invention

Since the present disclosure may be variously modified and have several exemplary embodiments, specific exemplary embodiments will be shown in the accompanying drawings and be described in detail in a detailed description.

Singular expressions include plural expressions unless the context clearly indicates otherwise. In the present application, it will be understood that terms "comprise", "include", etc. are to designate the presence or addition of one or more other features, numbers, steps, operations, elements, components, or combination thereof described in this specification, but do not preclude the presence or addition of one or more other features, numbers, steps, operations, elements, components, or combination thereof.

Unless defined otherwise, all terms used herein including technical or scientific terms have the same meanings as generally understood by a person having ordinary knowledge in the art to which the present disclosure pertains.

The terms defined in general dictionaries are construed as having meanings consistent with the contextual meanings of the art, but not interpreted as ideal meanings or excessively formal meanings unless explicitly defined in the present application.

Hereinafter, exemplary embodiments of the present disclosure will be described in detail with reference to the accompanying drawings.

FIG. 1 is a perspective view illustrating eyesight recovery glasses according to the present disclosure.

Referring to FIG. 1, eyesight recovery glasses according to the present disclosure includes: a frame unit 10 coupled to a glasses temple 5; a hinge unit 20 mounted on a middle end of the frame unit 10; a vibration unit 30 coupled to the hinge unit 20 and configured to generate ultrasonic waves through vibration; and a battery unit (not illustrated) embedded in a first side of the glasses temple 5.

The frame unit 10 is a configuration that provides a space in which components of the eyesight recovery glasses to be described later are coupled, and may be formed of a synthetic resin or a metal material. As illustrated in FIG. 1, each glasses temple 5 may be coupled to opposite ends of the frame unit 10, and the frame unit 10 may be provided in a semicircular shape in which an upper portion of a left eye part and an upper portion of a right eye part are open.

Here, the upper portion of the frame unit 10 is provided in an open shape so that the vibration unit 30 is moved to a region of a left eye side and a region of a right eye side by coupling the frame unit 10 to the hinge unit 20 and the vibration unit 30 which will be described later. This is because the present disclosure is designed such that ultrasonic waves are not simultaneously transmitted to the left eye and the right eye but transmitted only to an eyeball side selected for recovering eyesight.

The hinge unit 20 is mounted on the middle end of the frame unit 10. More particularly, the hinge unit 20 is mounted between the left eye part and the right eye part of the frame unit 10, and the vibration unit 30 which will be described later is coupled to the hinge unit 20, so that the vibration unit 30 is seated on the hinge unit 20 and is capable of being rotated around the hinge unit 20.

The vibration unit 30 is coupled to the hinge unit 20, and is configured to generate ultrasonic waves through vibration. Furthermore, the vibration unit 30 is provided as a single unit, and is provided such that the vibration unit 30 is capable of being rotated toward and seated on the left eye part or the right eye part of the frame unit 10 by the hinge unit 20.

In addition, of course, the rotation and the seating of the vibration unit 30 may be realized by adding various fastening/releasing configurations such as hooks, locking units, and so on for fixing the vibration unit 30 or switching a position of the vibration unit 30 after the vibration unit 30 is seated.

Here, the vibration unit 30 may include a piezoelectric element or a piezoelectric film 32 for generating vibration on a surface thereof, and the piezoelectric element or the piezoelectric film may be provided such that the piezoelectric element or the piezoelectric film is electrically connected to the battery unit and receives a driving power.

In addition, a recessed unit 34 that protrudes toward a direction of the eyeball is formed in a center of the vibration unit 30. This is to transmit ultrasonic waves as close to the eyeball as possible when a user wears the glasses.

Here, the ultrasonic waves generated by the vibration unit 30 are ultrasonic waves having a frequency of approximately 6 KHz to 12 KHz. Therefore, the ultrasonic waves in a low frequency band is generated through vibration and is transmitted to the eyeball, so that a physical damage to the eyeball is prevented and the ultrasonic waves also help to relieve eyeball strain, to increase blood flow, and to activate eyeball cells, thereby finally being capable of realizing eyesight correction or eyesight recovery.

In addition, a capacitive sensor or a pressure sensor (not illustrated) for detecting whether the vibration unit 30 is in contact with the eyeball may be mounted on the vibration unit 30. That is, by using the sensor described above, whether the vibration unit 30 is in close contact with the eyeball may be determined.

Meanwhile, an infrared distance sensor (not illustrated) for detecting a distance between the face and the glasses may be mounted on a first side on the first side of the glasses temple 5.

Here, by using each sensor, detection of whether the vibration unit 30 is in close contact with the eyeball or detection of a distance between the glasses and the face may be realized. Accordingly, ultrasonic waves transmission to the eye is capable of being realized in a state in which the vibration unit 30 is in close contact with the eyeball when the eye is closed or in a state in which the face and the glasses are positioned close together when the eye is opened.

Meanwhile, a Bluetooth module (not illustrated) capable of communicating wirelessly with another communication terminal may be mounted on the first side of the glasses temple 5.

Here, when the eyesight recovery glasses are provided in a form in which the Bluetooth module is mounted, the eyesight recovery glasses are capable of interworking wirelessly with an external communication terminal, thereby being capable of realizing an eyesight recovery schedule control and a driving control of the glasses through an application installed in the communication terminal.

Specifically, in the application, a UI which is capable of visually outputting user information, a schedule table on which the number of uses and the date of use are displayed, and a portion where the vibration unit 30 is to be seated when the application is used.

Meanwhile, in the eyesight recovery glasses according to the present disclosure, an LED indicator 7 configured to indicate a position and an operation state of the vibration unit 30 may be further mounted on a region where the glasses temple 5 and the frame unit 10 are in contact with each other.

The LED indicator 7 is configured to allow the user to recognize a state of the eyesight recovery glasses (a charging state, a fully charged state, a driving state, and so on) and the eyeball part to be recovered this time, and may be configured such that the LED indicator 7 blinks or illuminates light only on a first side thereof. (When the last use of the glasses is on the left eye, the indicator on the right eye side is illuminated when the glasses is used this time. Accordingly, when the vibration unit is seated on the left eye side, the indicator on the right eye side blinks, so that the indicator may allow the user to recognize that the vibration unit is required to be rotated.)

All the configurations described above may be provided such that the configurations are electrically connected to the battery unit and receive an operating power, and a controller (not illustrated) may be added so that driving control through a state detection of each configuration constituting the eyesight recovery glasses is capable of being performed.

In addition, in the eyesight recovery glasses according to the present disclosure, a notification unit (not illustrated) for informing the user of progress of the glasses such as a driving time, a completion time, and so on by sound or vibration may be further included. For example, when the driving time of the glasses is set to ten minutes, the notification unit may inform the user of an elapsed time and an end time of using the glasses by outputting vibration and sound such as outputting weak vibration two times/outputting weak notification sound at five minutes and outputting strong vibration two times/outputting strong notification sound at ten minutes, and so on. In addition, after the operation of the glasses is finished, a battery consumption of the glasses may be minimized by automatically blocking the power supply from the battery to the glasses.

As described above, the eyesight recovery glasses comprising the vibration unit according to the present disclosure is configured such that ultrasonic waves in a lower frequency band is directly transmitted to the eyeball rather than inducing an eye movement, thereby being capable of providing the vibration unit available for the eyesight recovery glasses realizing a substantial eyesight recovery effect.

In addition, ultrasonic waves transmitted to the eyeball may help to relieve eye strain, to increase blood flow, and to activate eye cells.

## Claims

1. Eyesight recovery glasses, comprising a vibration unit (30) being mounted on any one side or each of left and right eye sides of a frame unit (10) of the eyesight recovery glasses,
wherein the vibration unit (30) is provided such that the vibration unit (30) generates ultrasonic waves through vibration,
**characterized in that** the vibration unit (30) is coupled to a hinge unit (20) mounted on the frame unit (10) such that the vibration unit (30) is capable of being rotated toward and seated on a left eye part or a right eye part of the frame unit (10) through the hinge unit (20).

2. The eyesight recovery glasses of claim 1, wherein the vibration unit (30) comprises a piezoelectric element or a piezoelectric film (32) for generating vibration on a surface thereof.

3. The eyesight recovery glasses of claim 1 or 2, wherein the vibration unit (30) has a center thereof provided with a recessed unit (34) that protrudes toward a direction of an eyeball.

4. The eyesight recovery glasses of claim 1 - 3, wherein a capacitive sensor or a pressure sensor is mounted on the vibration unit (30) for detecting whether the vibration unit (30) is in contact with the eyeball.

## Patentansprüche

1. Sehkraftwiederherstellungsbrille, umfassend eine Vibrationseinheit (30), die auf einer beliebigen Seite oder auf jeder der linken und rechten Augenseiten einer Rahmeneinheit (10) der Sehkraftwiederherstellungsbrille montiert ist,
wobei die Vibrationseinheit (30) so vorgesehen ist, dass die Vibrationseinheit (30) Ultraschallwellen durch Vibration erzeugt,
**dadurch gekennzeichnet, dass**
die Vibrationseinheit (30) mit einer an der Rahmeneinheit (10) montierten Scharniereinheit (20) gekoppelt ist, sodass die Vibrationseinheit (30) fähig ist, durch die Scharniereinheit (20) in Richtung eines linken Augenteils oder eines rechten Augenteils der Rahmeneinheit (10) gedreht zu werden und darauf aufgesetzt zu werden.

2. Die Sehkraftwiederherstellungsbrille nach Anspruch 1, wobei die Vibrationseinheit (30) ein piezoelektrisches Element oder einen piezoelektrischen Film (32) zum Erzeugen von Vibration auf einer Oberfläche davon umfasst.

3. Die Sehkraftwiederherstellungsbrille nach Anspruch 1 oder 2, wobei die Vibrationseinheit (30) in ihrer Mitte eine vertiefte Einheit (34) aufweist, die in Richtung eines Augapfels vorsteht.

4. Die Sehkraftwiederherstellungsbrille nach Anspruch 1 - 3, wobei ein kapazitiver Sensor oder ein Drucksensor an der Vibrationseinheit (30) montiert ist, um zu erfassen, ob die Vibrationseinheit (30) mit dem Augapfel in Kontakt ist.

## Revendications

1. Lunettes de récupération de la vue, comprenant une unité de vibration (30) étant montée sur l'un des côtés ou sur chacun des côtés gauche et droit de l'œil d'une unité de monture (10) des lunettes de récupération de la vue,
dans lesquelles l'unité de vibration (30) est fournie de telle sorte que l'unité de vibration (30) génère des ondes ultrasonores par vibration,
**caractérisées en ce que**
l'unité de vibration (30) est couplée à une unité de charnière (20) montée sur l'unité de monture (10) de sorte que l'unité de vibration (30) est capable d'être tournée vers et placée sur une partie œil gauche ou une partie œil droit de l'unité de monture (10) via l'unité de charnière (20).

2. Les lunettes de récupération de la vue de la revendication 1, dans lesquelles l'unité de vibration (30) comprend un élément piézoélectrique ou un film piézoélectrique (32) pour générer des vibrations sur une surface de celle-ci.

3. Les lunettes de récupération de la vue de la revendication 1 ou 2, dans lesquelles l'unité de vibration (30) a un centre de celle-ci fourni d'une unité encastrée (34) qui fait sailli vers une direction d'un globe oculaire.

4. Les lunettes de récupération de la vue de la revendication 1 à 3, dans lesquelles un capteur capacitif ou un capteur de pression est monté sur l'unité de vibration (30) pour détecter si l'unité de vibration (30) est en contact avec le globe oculaire.
